# EUROPÄISCHE PATENTSCHRIFT

(11) **EP 1 746 050 B1**
(45) Veröffentlichungstag und Bekanntmachung des Hinweises auf die Patenterteilung: **19.12.2007**
(21) Anmeldenummer: 06014904.4
(22) Anmeldetag: 18.07.2006
(51) Int. Cl.: B65F 3/28, B65D 88/60

(54) **Aufweitbarer Dichtring**
Expandable sealing ring
Anneau d'étanchéité expansible

(30) Priorität: 22.07.2005 DE 202005011560 U
(43) Veröffentlichungstag der Anmeldung: 24.01.2007
(73) Patentinhaber: Grüning & Loske GmbH, 30880 Laatzen (DE)
(72) Erfinder: Loske, Dirk, 30880 Laatzen (DE)
(74) Vertreter: Glaeser, Joachim

(56) Entgegenhaltungen:
- FR-A- 2 789 059
- US-A- 5 114 054

## Beschreibung

Die Erfindung bezieht sich auf einen aufweitbaren Dichtring für ein Abfallentsorgungsfahrzeug aus einem elastischen Hohlprofil mit einem inneren mit einem Druckgas beschickbaren Hohlraum für die Abdichtung zwischen einem den Dichtring tragenden Kolben und einer Wandung eines zylindrischen Sammelbehälters des Abfallentsorgungsfahrzeugs, wobei die Außenumfangsfläche des Dichtringes an der Wandung anliegt und gleitet.

Dichtringe der eingangs genannten Art sind u.a aus der US-A-5 114 054 bekannt und werden insbesondere in Tankfahrzeugen eingesetzt, deren Flüssigkeitsbehälter mittels eines Trennkolbens in zwei Behälterteile variabler Größe unterteilt ist. Zur Einstellung unterschiedlicher Teilbehältergrößen sowie unter Umständen auch zum Zweck der Entleerung des Behälters, ist es erforderlich, den Trennkolben innerhalb des Behälters zu verschieben. Bei bekannten Dichtringen hat sich in der Praxis das Problem gezeigt, dass der Dichtring unter dem Einfluss des ihn aufweitenden Druckgases nach einer gewissen Stillstandszeit des Kolbens sehr fest in der Behälterwandung haftet.

Es ist auch ein Entsorgungsbehälter mit einem Ausstoßkolben bekannt (EP 0 583 646 A2), bei dem in einer zylindrischen Kammer ein zylindrischer eine Dichtung tragender Kolben vorgesehen ist, um eingesammelten Abfall ausgeben zu können.

Die Dichtung, und zwar der elastische Teil der Dichtung, wird aus einem Gummi in einem Ring aufgenommen, der im Querschnitt U-förmig bzw. ein C-Profil aus einem Metall ist, um den elastischen Teil der Dichtung zu schützen

Bei Transportfahrzeugen der Abfallentsorgung oder für die Kanalspülung werden die Dichtringe höchsten Beanspruchungen ausgesetzt. Es sind nicht nur aggressive Medien, sondern auch mechanische Teile, die unter ungünstigen Bedingungen die Dichtung durchaus soweit zerstören können, dass sie ihre eigentliche Funktion nicht mehr ausführen kann.

Hier setzt die vorliegend Erfindung an und will einen Dichtring der eingangs genannten Art verbessern, was dadurch erreicht wird, dass der Dichtring aus mindestens zwei unterschiedlichen miteinander verbundenen Materialien gebildet ist; und im Bereich der Außenumfangsfläche das Material weicher und/oder höher elastischer und/oder beständiger gegen aggressive Medien als im verbleibenden Teil des Dichtringes ist

Durch Auswahl von Materialien von unterschiedlichen Eigenschaften kann ein Dichtring gebildet werden, der je nach den unterschiedlichen Beanspruchungen auf diese örtlich besser angepasst ist als ein Dichtring, der insgesamt aus einem Material besteht. In Bereich der Gleitfläche ist ein bevorzugter Dichtring gemäß der Erfindung widerstandsfähiger und kerbzäher.

In bevorzugter Ausgestaltung ist es vorgesehen, dass im Gleitbereich ein selbstschmierendes oder ein Gleitmittel ausschwitzendes Material vorhanden ist.

In weiter bevorzugter Ausgestaltung kann es auch vorgesehen sein, dass das gegen aggressive Medien beständige Material das andere Material mehrseitig oder vollständig umgibt.

Als Materialien für Dichtringe gemäß der Erfindung kommen Kunststoff-paarungen, also Polymere, aber auch Polymere und Elastomere, in Frage. Es kommt darauf an, dass die gewählten Materialien gut aneinander befestigt werden oder miteinander vulkanisiert werden können. Auch andere Arten der Vernetzung sind hier denkbar.

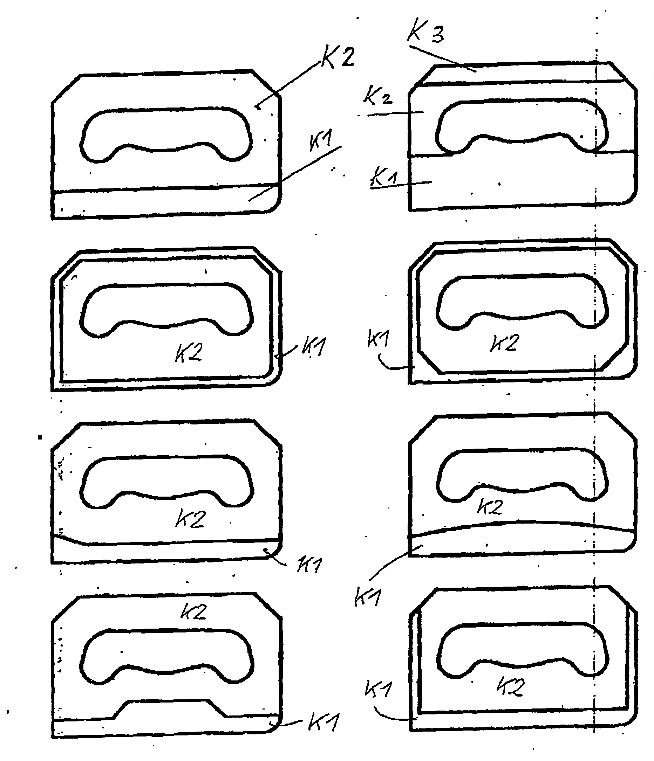

Die Erfindung wird nachstehend anhand der Zeichnung beispielsweise erläutert.

Die Figur zeigt acht Querschnittsansichten von unterschiedlichen Ausführungs-formen von Dichtringen gemäß der Erfindung.

Bei den gezeigten Ausführungsformen handelt es sich um Querschnitts-ansichten, wobei die jeweils unten liegende Fläche diejenige ist, die an der Gegengleitfläche anliegt bzw. dort gleitet. Es ist der Hohlraum der Hohlkammer zu erkennen und durch eine Trennungslinie ist die Verbindungsfläche der beiden Materialien bzw. der drei verwendeten Materialien zu erkennen.

Bei der Herstellung des Dichtrings gemäß der Erfindung aus einem elastomeren Material wird zunächst eine Strangform in ausreichender Länge hergestellt Die beiden Enden des Stranges werden während eines ersten Vulkanisationsvorganges so stark gekühlt, dass dort praktisch keine Vulkanisation stattfindet. Danach wird der Strang zu einem Ring gelegt und die zuvor nicht vulkanisierten Bereiche des Ringes werden nun in einem abschließenden Vulkanisationsvorgang ausvulkanisiert.

In der Zeichnung sind insgesamt 8 mögliche Ausführungsformen von Dicht-ringen gemäß der Erfindung im Querschnitt dargestellt, die sich untereinander hinsichtlich der Geometrie unterscheiden.

Mit K 1 ist die Schicht bezeichnet worden, die im Einsatz des Dichtringes an der Innenwandung des zylindrischen Behälters gleitet. Diese Schicht soll gemäß der Erfindung weicher und/oder höher elastischer und/oder beständiger gegen aggressive Medien sein als die verbleibende Schicht, die mit K 2 bezeichnet ist und letztendlich in der Nut eines Kolbens festsitzt. Mit K 3 ist eine weitere härtere Schicht bezeichnet.

Die Schicht K 1 kann sich über eine oder drei oder alle vier Flächen des Dichtrings erstrecken, wie dies in den Figuren auch dargestellt ist.

Die unteren vier Ausführungsformen können insbesondere dann eingesetzt werden, wenn die Schicht K 1 aus einer Gummimischung gebildet ist, die ein Gleitmittel ausschwitzen kann.

## Patentansprüche

1. Aufweitbarer Dichtring für ein Abfallentsorgungsfahrzeug aus einem elastischen Hohlprofil mit einem inneren mit einem Druckgas beschickbaren Hohlraum für die Abdichtung zwischen einem den Dichtring tragenden Kolben und einer Wandung eines zylindrischen Sammelbehälters des Abfallentsorgungsfahrzeugs, wobei die Außenumfangsfläche des Dichtringes an der Wandung anliegt und gleitet, **dadurch gekennzeichnet, dass** der Dichtring aus mindestens zwei unterschiedlichen, miteinander verbundenen Materialien gebildet ist; und dass im Bereich der Außenumfangsfläche das Material weicher und/oder höher elastischer und/oder beständiger gegen aggressive Medien als im verbleibenden Teil des Dichtringes ist.

2. Dichtring nach Anspruch 1, **dadurch gekennzeichnet, dass** im Gleitbereich ein selbstschmierendes oder ein Gleitmittel ausschwitzendes Material vorhanden ist.

3. Dichtring nach einem der Ansprüche 1 oder 2, **dadurch gekennzeichnet, dass** das gegen aggressive Medien beständige Material das andere Material mehrseitig oder vollständig umgibt

4. Dichtring nach einem der Ansprüche 1 bis 3, **dadurch gekennzeichnet, dass** die Materialien aus den Gruppen der Polymere und Elastomere ausgewählt sind.

## Claims

1. Expandable sealing ring for a waste disposal vehicle made of an elastic hollow section with an inner cavity chargeable with a pressurised gas for the sealing between a piston carrying the sealing ring and a wall of a cylindrical collection bin of the waste disposal vehicle, wherein the outer peripheral surface of the sealing ring abuts to the wall and glides thereon, **characterised in that** the sealing ring consists of at least two different materials connected with each other; and that the material in the area of the outer peripheral surface is softer and/or more elastic and/or more resistant against aggressive media as in the remaining part of the sealing ring.

2. Sealing ring according to claim 1, **characterised in that** in the sliding area a self-lubricating or a lubricant exuding material is present.

3. Sealing ring according to one of the claims 1 or 2, **characterised in that** the material resistant against aggressive media surrounds the other material on several sides or completely.

4. Sealing ring according to one of the claims 1 to 3, **characterised in that** the materials are selected from the groups of polymers and elastomers.

## Revendications

1. Anneau d'étanchéité expansible pour véhicules de traitement de déchets ayant un profil creux élastique avec une cavité intérieure pouvant être chargée d'un gaz comprimé et destiné à assurer l'étanchéification entre un piston portant l'anneau d'étanchéité et la paroi d'un récipient collecteur cylindrique du véhicule de traitement de déchets, la surface périphérique extérieure de l'anneau d'étanchéité s'appuyant et glissant sur ladite paroi, **caractérisé en ce que** l'anneau d'étanchéité est constitué d'au moins deux matériaux différents reliés entre eux et **en ce que** le matériau de l'anneau d'étanchéité est plus mou et/ou plus élastique et/ou plus résistant à des milieux agressifs dans la zone de sa surface périphérique extérieure que dans la partie restante.

2. Anneau d'étanchéité selon la revendication 1 **caractérisé en ce que** dans la zone de glissement est prévu un matériau autolubrifiant ou un matériau suintant un lubrifiant.

3. Anneau d'étanchéité selon l'une des revendications 1 ou 2 **caractérisé en ce que** le matériau résistant à des milieux agressifs entoure l'autre matériau sur plusieurs côtés ou entièrement.

4. Anneau d'étanchéité selon l'une des revendications 1 à 3 **caractérisé en ce que** les matériaux sont choisis dans les groupes des polymères et des élastomères.
